# DEMANDE DE BREVET EUROPEEN

(11) **EP 4 456 005 A1**
(43) Date de publication de la demande: **30.10.2024**
(21) Numéro de dépôt: 24172268.5
(22) Date de dépôt: 24.04.2024
(51) Int. Cl.: G06T 19/20, G01C 15/00

(54) **PROCÉDÉ DE MARQUAGE NUMÉRIQUE DANS UN ENVIRONNEMENT HYBRIDE**

(30) Priorité: 26.04.2023 FR 2304211
(71) Demandeur: OMNIX, 78530 Buc (FR)
(72) Inventeur: CREMONA, Anthony, 78530 BUC (FR); GONZALEZ, Clément, 78000 VERSAILLES (FR); LY, Bau, 78530 BUC (FR); HANNEBICQUE, Baptiste, 78650 BEYNES (FR); ROMAN, Hervé, 78530 BUC (FR)
(74) Mandataire: Plasseraud IP

(57) **Abrégé**

Procédé de marquage d'un modèle hybride d'un objet mis en oeuvre par un système de marquage (1,2), ledit modèle hybride comprenant au moins un modèle physique (4) de l'objet dans un environnement physique et un modèle numérique (5) de l'objet, le procédé comprenant les étapes suivantes :
- collecter (340) des données de positionnement d'un point d'intérêt physique du modèle physique (4) dans un premier référentiel prédéfini (X,Y,Z) de coordonnées en trois dimensions,
- identifier (360), en temps réel, une position d'un point d'intérêt virtuel sur le modèle numérique (5) dans un second référentiel prédéfini (x,y,z), ledit point d'intérêt virtuel étant associé au point d'intérêt physique et ladite position étant obtenue à partir des données de positionnement collectées,
- générer (370) un marquage numérique associé à ladite position sur le modèle numérique (5) de l'objet.

## Description

### Domaine technique

La présente divulgation relève du domaine de la modélisation pour la conception et le design industriel et plus précisément d'un dispositif de marquage numérique synchronisé avec un environnement réel.

### Technique antérieure

La conception et le design industriel de précision d'un produit sont des étapes cruciales dans de nombreux secteurs tels que l'automobile, l'électroménager ou encore le luxe. Au cours du développement du produit, de nombreux acteurs interagissent, manipulent et interviennent sur plusieurs modélisations du produit, allant de modélisations logicielles en deux (2D) ou trois dimensions (3D) à des prototypes via des maquettes ou des impressions 3D. Ces acteurs peuvent être des designers industriels, des ingénieurs, des dessinateurs industriels, des opérateurs, des mécaniciens, etc. et une telle diversité d'acteurs peut intervenir sur différents aspects, via différents outils et à différentes étapes de la chaîne de développement du produit.

En particulier, un projet de développement d'un objet, par exemple une voiture, requiert des moyens techniques permettant d'assurer une cohérence du travail sur des modèles à la fois physiques (e.g., des maquettes) et numériques (e.g., une modélisation logicielle). Par exemple, un designer industriel travaille essentiellement sur des modèles numériques d'un objet afin d'en optimiser le design et/ou de corriger des défauts de conception tandis qu'un opérateur de production intervient sur des prototypes réels de l'objet afin de relever des défauts ou de faire des tests de fiabilité. Il existe donc un besoin d'utiliser des modèles physiques et numériques de façon conjointe et synchronisée, par des acteurs distincts de la chaîne de conception, afin d'aboutir à la conception d'un produit. De la même façon, des collaborateurs d'un même corps de métier (par exemple, dans le domaine du design et de la conception, comme des designers ou des modeleurs 3D) peuvent chercher à intervenir sur des modèles physiques et numériques de façon conjointe et synchronisée. De plus, les acteurs travaillant au développement du produit peuvent chercher à observer, mettre en évidence ou attirer l'attention sur certains détails de conception et design de l'objet. Pour cela, dans le domaine automobile par exemple, il est connu de procéder à un marquage physique sur un prototype de l'objet (avec des pastilles accolées sur le prototype par exemple) et de collecter des prises de vue selon différents angles d'un tel marquage. Ces prises de vue doivent alors être transposées dans les modélisations numériques de l'objet, afin que d'autres acteurs puissent intervenir dans la chaîne de développement de l'objet à partir de sa modélisation numérique. Ceci est d'autant plus important que les équipes peuvent être distantes les unes des autres et que les maquettes physiques sont difficilement déplaçables.

Néanmoins, ces processus présentent des limites, notamment en termes de précision et d'efficacité. En effet, tout d'abord, le marquage physique peut être erroné si la pastille n'est pas précisément collée à l'emplacement désiré ou est déplacée. Par ailleurs, la modélisation numérique qui s'ensuit dépend de la qualité et des angles des prises de vue de la maquette physique, qui peuvent être imprécis ou approximatifs. Enfin, une telle modélisation numérique est « figée » en ce qu'elle est associée à des prises de vue de l'objet. La traçabilité, le suivi et l'intervention simultanée de différents acteurs sur le développement du produit sont complexifiés du fait d'un tel « décalage » entre l'environnement réel et l'environnement numérique.

De nombreux logiciels de modélisation numérique existent. Cependant, ces derniers ne permettent pas une interaction synchronisée et surtout à l'échelle de précision requise (e.g., de l'ordre du centimètre voire du millimètre) dans de nombreux secteurs, entre des modélisations réelles et virtuelles de l'objet. Ces secteurs et leurs acteurs requièrent pourtant de travailler ensemble, notamment en temps réel, dans des environnements hybrides, à savoir physiques et numériques. Si le domaine voisin de la réalité virtuelle regorge de solutions pour que des opérateurs distants partagent un environnement virtuel commun, lesdits opérateurs restent dans l'impossibilité de partager leurs environnements réels respectifs.

Il existe donc un besoin technique et pratique de permettre des interventions (e.g., un marquage ou pastillage) simplifiées, synchronisées et de haute précision sur des modélisations hybrides d'un même objet, à la fois dans un environnement réel et dans un environnement numérique. Il existe également un besoin de moyens techniques permettant une traçabilité et une interaction en temps réel de telles interventions, qu'elles soient faites dans un environnement ou un autre.

### Résumé

La présente divulgation vient améliorer la situation.

Il est proposé un procédé de marquage d'un modèle hybride d'un objet mis en oeuvre par un système de marquage, ledit modèle hybride comprenant au moins un modèle physique de l'objet dans un environnement physique et un modèle numérique de l'objet, le procédé comprenant les étapes suivantes :
- collecter des données de positionnement d'un point d'intérêt physique du modèle physique dans un premier référentiel prédéfini de coordonnées en trois dimensions,
- en fonction des données de positionnement collectées, identifier, en temps réel, une position d'un point d'intérêt virtuel sur le modèle numérique dans un second référentiel prédéfini, ledit point d'intérêt virtuel étant associé au point d'intérêt physique et ladite position étant obtenue à partir des données de positionnement collectées,
- générer un marquage numérique associé à ladite position sur le modèle numérique de l'objet.

Par conséquent, le procédé proposé permet une mise à jour synchronisée d'un modèle physique, typiquement une maquette physique ou un prototype d'un produit, et un modèle numérique, typiquement une maquette ou modélisation 3D. Par exemple, des interventions sur un prototype physique peut permettre de relever des défauts de conception du produit et le procédé proposé permet alors de reporter de telles interventions sur le modèle numérique, conduisant à l'obtention d'un modèle numérique à jour intégrant une correction des défauts relevés sur le modèle physique et pouvant être exploité pour le fraisage et/ou la production en série du produit.

Le procédé permet alors d'optimiser l'efficacité d'un processus de conception et de design industriel d'un produit, impliquant le travail concurrent sur un modèle physique et modèle numérique du produit. En effet, le procédé permet d'abord un gain de temps, en ce que les informations collectées à partir du modèle physique (typiquement, des données de positionnement d'un point d'intérêt physique) sont directement générées, en temps réel, sur le modèle numérique (via un marquage numérique associé à un tel point d'intérêt physique). Le procédé proposé permet avantageusement d'éviter toute perte d'information ou délai de transposition d'information entre les modèles physique et numérique.

Par ailleurs, le procédé proposé permet avantageusement de résoudre des problèmes de traçabilité des phases de mise en forme d'un projet de développement d'un produit industriel, notamment en ce qu'une intervention sur le modèle physique peut être, en temps réel, transposée et mise à jour sur le modèle numérique. Une telle mise à jour du modèle numérique peut être accompagnée de métadonnées non directement visibles sur le modèle mais utile accessible à d'autres systèmes tels que ceux dédiés à la gestion de projet (dates, identification des intervenants, etc.).

De plus, le procédé proposé permet avantageusement d'optimiser l'efficacité d'un processus de conception et de design industriel d'un produit impliquant une gestion collaborative du processus par une pluralité d'acteurs travaillant sur un même produit, potentiellement à distance, en s'affranchissant de la difficulté liée à la localisation du modèle physique. L'ensemble des informations portées sur un modèle physique peut en effet être synchronisé et donc retranscrit sur le modèle numérique.

Par un modèle hybride d'un produit, il est fait référence à une modélisation ou une représentation du produit incluant des modèles de différentes natures. En particulier, une telle modélisation peut inclure une modélisation réelle du produit via un modèle physique (e.g., une maquette) et une modélisation digitale ou numérique du produit (e.g., un modèle numérique 3D).

Par des données de positionnement, il est fait référence à des données permettant d'identifier un positionnement d'un point d'intérêt physique dans le premier référentiel, physique (par exemple, un point sur une maquette). En particulier, de telles données de positionnement peuvent inclure des données de localisation dans le premier référentiel (ou l'espace physique) et des données d'orientation dans le premier référentiel.

Par l'étape d'identification, en temps réel, une position d'un point d'intérêt virtuel sur le modèle numérique, il est fait référence à la mise en correspondance de points physiques dans l'espace physique à des points virtuels dans l'espace numérique (ou virtuel). En particulier, l'identification fait référence à une association préétablie des positions et des données de positionnement, de sorte que l'identification de la position peut être mise en oeuvre à partir des données de positionnement collectées.

Par un marquage numérique, il est fait référence à une mise en évidence, de façon digitale ou numérique, d'une zone ou d'un ensemble de points du modèle numérique. Un tel marquage numérique, également désigné par pastille numérique, peut par exemple correspondre à une surbrillance, un contour, une superposition numérique sur l'ensemble de points du modèle numérique.

Les caractéristiques exposées dans les paragraphes suivants peuvent, optionnellement, être mises en oeuvre, indépendamment les unes des autres ou en combinaison les unes avec les autres :

Selon un mode de réalisation, le modèle physique et le modèle numérique sont synchronisés par triangulation dans l'environnement du modèle physique, de sorte qu'un point physique du modèle physique est associé à un point virtuel du modèle numérique.

Par conséquent, la mise en correspondance des points physiques et virtuels dans l'espace physique et dans l'espace virtuel est rendue possible par la synchronisation des modèles physique et numérique. Autrement dit, les modélisations au sein du modèle hybride sont superposées (i.e., synchronisées), de sorte qu'un point d'intérêt virtuel peut être identifié (et notamment, la position de ce point d'intérêt virtuel) à partir du point d'intérêt physique. Une mise en correspondance des points d'intérêts identifiés sur différentes modélisations contenues dans le modèle hybride est alors possible par synchronisation des modèles physique et numériques.

Selon un mode de réalisation, les données de positionnement sont collectées à partir d'un marquage physique réalisé sur le modèle physique.

Par conséquent, les données de positionnement peuvent être associées à un point d'intérêt spécifique mis en évidence sur le modèle physique par un marquage physique d'un tel point d'intérêt. Un tel marquage physique permet avantageusement d'identifier de façon précise le point d'intérêt physique sur le modèle physique. Par ailleurs, la réalisation d'un tel marquage physique sur le modèle physique peut avantageusement permettre d'affiner les données de positionnement, qui sont alors associées à un point d'intérêt physique clairement identifié et délimité dans l'espace physique par le marquage physique.

Par un marquage physique, il est fait référence à une mise en évidence, de façon physique ou réelle, d'une zone ou d'un ensemble de points du modèle physique. Un tel marquage physique, également désigné par pastille physique, peut par exemple correspondre à une gommette apposée sur le modèle physique, un symbole ou une annotation manuscrite apposée sur le modèle physique ou encore à un poinçon réalisé sur le modèle physique. En particulier, le marquage physique peut être superposé ou confondu avec le point d'intérêt physique.

Selon un mode de réalisation, les données de positionnement sont collectées par rayonnement infrarouge par interaction du système de marquage avec des balises infrarouges disposées dans l'environnement physique.

Par conséquent, le procédé permet avantageusement de collecter de façon précise les données de positionnement du point d'intérêt physique. En particulier, le rayonnement infrarouge utilisé à l'aide de balises infrarouges permet avantageusement de déterminer avec précision le positionnement du point d'intérêt physique dans un environnement intérieur, par exemple dans un bâtiment. Par exemple, le procédé peut être appliqué à partir d'une maquette physique ou d'un prototype disposé à l'intérieur d'un atelier, d'un bâtiment d'entreprise ou d'un lieu d'exposition.

Selon un mode de réalisation, le procédé comprend en outre, après l'étape de collecte des données de positionnement :
- comparer les données de positionnement avec des plages de positionnement prédéfinies, lesdites plages de positionnement dépendant au moins de dimensions associées au modèle physique de l'objet et, en fonction de ladite comparaison :
- ajuster la position du point d'intérêt virtuel par une projection surfacique dudit point d'intérêt virtuel sur une surface du modèle numérique, de sorte que le marquage numérique appartienne à une surface du modèle numérique en une position projetée.

Par conséquent, le procédé proposé permet avantageusement de réajuster ou de corriger automatiquement la position du point d'intérêt virtuel sur le modèle numérique, malgré une imprécision, une incohérence ou une donnée aberrante dans les données de positionnement. Ainsi, le procédé permet de prendre en compte de potentiels décalage ou désynchronisation des modèles physique et numérique, générant une correspondance imprécise entre les points physiques et virtuels.

Par des plages de positionnement prédéfinies, il peut être fait référence à un ensemble de coordonnées ou de valeurs, ordonnées, (e.g., des intervalles de valeurs) désignant des points dans le premier référentiel (physique). De telles plages de positionnement peuvent par exemple permettre de délimiter un espace (ou une zone de l'environnement réel, ou physique) occupé par le modèle physique. Par exemple, de telles plages de positionnement peuvent délimiter l'espace occupé par une maquette physique selon la longueur, la largeur et la hauteur de la maquette physique. Les valeurs, l'amplitude ou encore le degré de précision des plages de positionnement peut alors dépendre des dimensions de la maquette physique. Les plages de positionnement peuvent délimiter la zone de l'environnement réel occupé par le modèle physique à partir d'une surface physique du modèle physique. En particulier, les plages de positionnement peuvent prendre en compte une marge d'erreur non nulle, de sorte que l'espace physique délimité par les plages de positionnement peut être plus large (en volume) que l'espace physique effectivement occupé par le modèle physique.

Par une comparaison entre les données de positionnement et les plages de positionnement, il est fait référence à un traitement (ou pré-traitement) des données de positionnement collectées, et notamment des données de localisation collectées, de sorte à déterminer si le point d'intérêt physique tel qu'identifié par les données de positionnement, appartient à la zone de l'environnement réel correspondant à l'espace occupé par le modèle physique. En particulier, une telle comparaison permet notamment de délimiter les points physiques à associer à des points virtuels dans l'espace physique, et ainsi de réduire la complexité computationnelle ou encore l'espace de stockage requis pour identifier la position du point d'intérêt virtuel associé au point d'intérêt physique.

L'étape d'ajustement de la position du point d'intérêt virtuel est mise en oeuvre en fonction de ladite comparaison. Autrement dit, une telle étape est mise en oeuvre en fonction d'un résultat de ladite comparaison. Dans un mode de réalisation, l'étape d'ajustement peut être mise en oeuvre au moins si les données de positionnement sont inclues dans les plages de positionnement. Dans un mode de réalisation, l'étape d'ajustement peut être mise en oeuvre si les données de positionnement sont inclues dans les plages de positionnement et si les données de positionnement sont proches des bords ou valeurs extrêmes d'une ou plusieurs des plages de positionnement (par exemple, si un écart entre une donnée de positionnement et une valeur extrême d'une plage de positionnement est inférieur à un seuil prédéfini). Une telle condition est particulièrement avantageuse dans le cas où les plages de positionnement délimite un espace occupé plus large que l'espace délimité par les surfaces du modèle physique : l'étape de projection permet notamment d'ajuster la position pour des points d'intérêt physiques n'appartenant pas à une surface du modèle physique mais appartenant à un voisinage d'une telle surface. Dans ce cas, l'étape d'ajustement permet de ramener le marquage numérique sur une surface du modèle physique, malgré un point d'intérêt physique distant d'une surface du modèle physique, due à une légère désynchronisation au sein du modèle hybride par exemple.

Par un projection surfacique du point d'intérêt virtuel pour ajuster la position du point d'intérêt virtuel en une position projetée, il est fait référence à une adaptation de la position du point d'intérêt virtuel dans l'espace virtuel (et donc à un ajustement de la position identifiée dans le deuxième référentiel, virtuel). Une telle adaptation peut se traduire par des données d'ajustement associées à la position identifiée du point d'intérêt virtuel. La projection surfacique permet alors d'obtenir un marquage numérique appartenant à une surface du modèle numérique, malgré un point d'intérêt physique associé n'appartenant pas à une surface du modèle physique. Lorsque le point d'intérêt virtuel identifié appartient à la surface du modèle numérique, une telle projection surfacique peut être comprise comme une projection ayant une distance nulle, de sorte que la position identifiée correspond à la position projetée.

Selon un mode de réalisation, le procédé comprend en outre, après l'étape de collecte des données de positionnement :
- comparer les données de positionnement avec des plages de positionnement prédéfinies, lesdites plages de positionnement dépendant au moins de dimensions associées au modèle physique de l'objet et, si les données de positionnement du point d'intérêt physique se trouvent hors des plages de positionnement :
- émettre un signal requérant une collecte de secondes données de positionnement d'un second point d'intérêt physique du modèle physique dans le premier référentiel prédéfini.

Par conséquent, le procédé proposé permet avantageusement de réduire la complexité computationnelle ou encore l'espace de stockage requis pour identifier la position du point d'intérêt virtuel associé au point d'intérêt physique, en ne traitant pas systématiquement toutes les données de positionnement collectées. En effet, le procédé propose notamment, lorsque les données de positionnement se trouvent hors de plages de positionnement, d'interrompre le traitement de telles données de positionnement et d'émettre un signal requérant une autre collecte de données de positionnement. Par exemple, un tel signal peut être émis si les données de positionnement correspondent à un point d'intérêt localisé trop loin par rapport au modèle physique (à savoir, hors des plages de positionnement), de sorte qu'aucun point d'intérêt physique plausible désigné sur le modèle physique ne peut être identifié (et en conséquence, aucun point d'intérêt virtuel n'est identifié sur le modèle numérique).

Par un signal émis, il peut être fait référence à une indication, par exemple visuelle, sonore, haptique, émise par le système de marquage pour indiquer l'interruption du procédé de marquage jusqu'à ce que de nouvelles données de positionnement soient recollectées ou une absence de marquage numérique générée à partir des données de positionnement collectées.

Selon un mode de réalisation, le marquage numérique s'étend sur un ensemble de points d'au moins une surface du modèle numérique, ledit ensemble de points résultant d'une projection surfacique du point d'intérêt virtuel sur ladite surface.

Selon un mode de réalisation, les données de positionnement incluant au moins des données relatives à une orientation du système de marquage dans l'environnement physique, et dans lequel ladite projection surfacique dépend de ladite orientation du système de marquage par rapport à au moins une surface physique du modèle physique.

Par conséquent, le procédé proposé permet avantageusement de prendre en compte l'orientation du système de marquage pour générer le marquage numérique sur la surface visée du modèle numérique. En particulier, une telle projection surfacique n'est pas nécessairement mise en oeuvre sur la surface la plus proche (i.e., ayant la distance la plus courte) avec le point d'intérêt virtuel associé au point d'intérêt physique, mais dépend notamment de l'orientation du système, qui fournit des précisions supplémentaires sur le point d'intérêt visé.

Selon un mode de réalisation, le procédé comprend en outre, après l'étape de collecte des données de positionnement :
- enregistrer une prise de vue d'une portion du modèle physique de l'objet comprenant le point d'intérêt physique, ladite prise de vue étant associée aux données de positionnement,
et dans lequel ladite prise de vue devient une métadonnée du marquage numérique.

Par conséquent, le procédé permet d'enrichir le modèle numérique mis à jour par le marquage numérique généré, notamment avec des métadonnées. En particulier, le procédé permet d'obtenir des prises de vue, ou captures d'écran, de portions du modèle physique et de les associer au modèle numérique, notamment au marquage numérique généré à partir du point d'intérêt physique désigné sur le modèle physique. Le modèle numérique et le modèle physique sont alors d'autant plus mis en correspondance et peuvent être exploités de façon complémentaire et synchronisée.

Selon un autre aspect, il est proposé un système de marquage numérique d'un objet comprenant au moins :
- un dispositif de marquage configuré pour pointer un point d'intérêt physique du modèle physique de l'objet, ledit pointage incluant le relevé d'un positionnement du point d'intérêt physique par rapport au modèle physique de l'objet,
- une unité de marquage configurée pour recevoir des données de positionnement dudit positionnement relevé, et
- au moins une unité de traitement configurée pour mettre en oeuvre le procédé proposé.

Dans un mode de réalisation, le système comprend en outre :
- une interface de communication infrarouge configurée pour émettre des signaux infrarouges à destination de balises infrarouges disposées dans un environnement physique du modèle physique de l'objet,
et dans lequel le positionnement du point d'intérêt physique est relevé à partir desdits signaux infrarouges.

Selon un autre aspect, il est proposé un programme informatique comportant des instructions pour la mise en oeuvre du procédé proposé lorsque ce programme est exécuté par un processeur.

Selon un autre aspect, il est proposé un support d'enregistrement non transitoire lisible par un ordinateur sur lequel est enregistré un programme pour la mise en oeuvre du procédé lorsque ce programme est exécuté par un processeur.

### Brève description des dessins

D'autres caractéristiques, détails et avantages apparaîtront à la lecture de la description détaillée ci-après, et à l'analyse des dessins annexés, sur lesquels :
**Fig. 1**

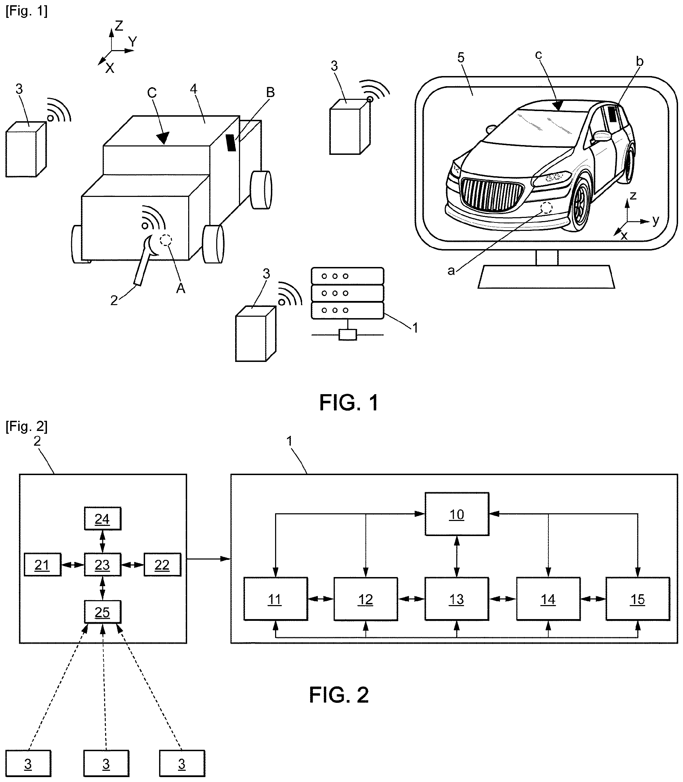

   [Fig. 1] montre un modèle hybride selon un mode de réalisation.
**Fig. 2**
   [Fig. 2] montre une schématisation d'un modèle hybride selon un mode de réalisation.
**Fig. 3**

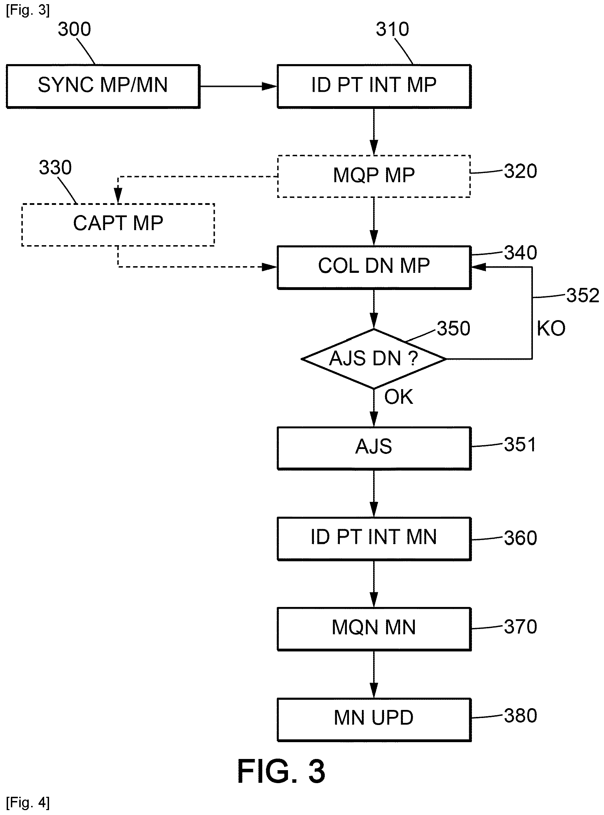

   [Fig. 3] montre des étapes d'un procédé de marquage d'un modèle hybride selon un mode de réalisation.
**Fig. 4**

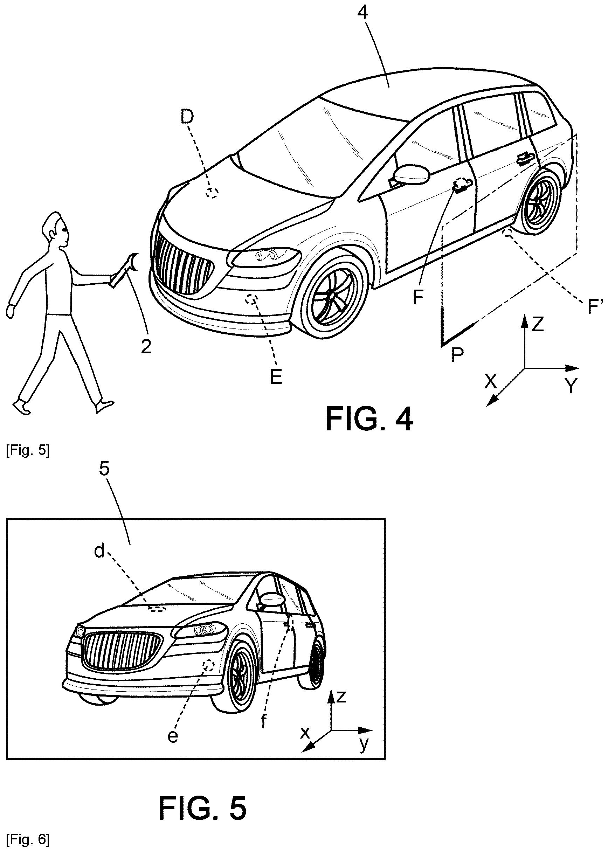

   [Fig. 4] montre un modèle physique selon un mode de réalisation.
**Fig. 5**
   [Fig. 5] montre un modèle numérique selon un mode de réalisation.
**Fig. 6**

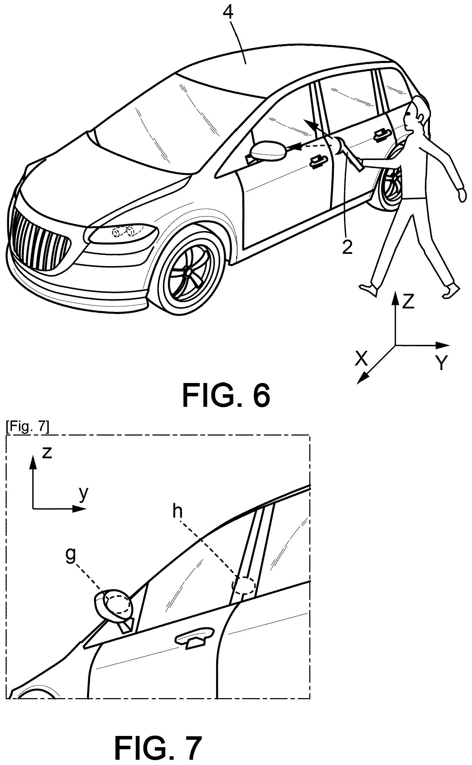

   [Fig. 6] montre un modèle physique selon un mode de réalisation.
**Fig. 7**
   [Fig. 7] montre une capture d'écran d'un modèle numérique selon un mode de réalisation.

### Description des modes de réalisation

Il est maintenant fait référence à la figure 1. La figure 1 illustre un environnement de modélisation dans le domaine de la conception et du design industriel. Un tel domaine peut par exemple concerner des secteurs de pointe comme le secteur automobile ou le secteur du luxe ou d'autres secteurs industriels de production en série comme l'électroménager. Dans de tels secteurs, la modélisation d'un produit ou d'une pièce (e.g., un véhicule, un appareil électroménager, une pièce automobile ou encore un accessoire) peut comprendre la conception d'un modèle physique 4 et d'un modèle numérique 5. La modélisation d'un produit incluant à la fois le modèle physique 4 et le modèle numérique 5 est désignée par un modèle dit « hybride ».

Le modèle physique 4 peut par exemple correspondre à une maquette physique en trois dimensions selon un référentiel physique (X,Y,Z), réalisée sous la forme d'un prototype à échelle 1 ou encore sous forme d'impression 3D. Un tel modèle physique 4 peut présenter un quelconque niveau de maturité technologique (en anglais « Techology Readiness Level » ou TRL), en partant d'un prototype comprenant une structure approximative du produit (comme représenté par le modèle physique 4 en figure 1) à des prototypes sensiblement aboutis et/ou opérationnels (comme représenté par le modèle physique 4 en figures 4 et 6).

Le modèle numérique 5 peut correspondre à une modélisation en trois dimensions (3D) du produit, réalisée sous la forme d'une maquette 3D, ou encore d'un modèle filaire, surfacique, solide ou par maillage 3D par exemple.

Le modèle hybride tel que représenté en figure 1 peut typiquement être conçu et exploité lors d'une phase de mise en forme d'un produit au cours d'un projet de conception industrielle. Dans un tel contexte, le modèle physique 4 peut être utilisé afin de détecter, d'identifier et/ou de mettre en évidence de potentiels défauts de conception ou de design. Le modèle numérique 5 peut, quant à lui, intégrer la correction des défauts relevés sur le modèle physique 4, de sorte à obtenir un modèle numérique à jour. Le modèle numérique 5 à jour peut alors être employé pour une phase de lancement de la production du produit par exemple.

Afin de permettre une telle utilisation conjointe et synchronisée des modèles physique 4 et numérique 5, l'environnement de modélisation tel que proposé en figure 1 inclut en outre un système de marquage du modèle hybride. Un tel système de marquage peut comprendre une unité de marquage 1 et un dispositif de marquage 2 interagissant avec des balises de positionnement 3. Le système de marquage est configuré pour générer un marquage numérique a, b, c (ou pastille virtuelle) de points d'intérêt virtuels sur le modèle numérique 5 à partir d'un marquage physique A, B, C (ou pastille physique) de points d'intérêts physiques sur le modèle physique 4. En particulier, le marquage numérique a, b, c et le marquage physique A, B, C sont associés par une synchronisation des modèles numérique 5 et physique 4. Une telle synchronisation du modèle hybride sera décrite dans la suite.

Il est fait référence à la figure 2. La figure 2 détaille une structure schématisée du système de marquage.

Le dispositif de marquage 2 du système de marquage peut correspondre à un dispositif configuré pour être pris en main et déplacé par un individu (ou utilisateur), sous la forme d'une perche par exemple. En particulier, le dispositif de marquage 2 est configuré pour identifier un point d'intérêt physique sur le modèle physique 4 du produit. Le dispositif de marquage 2 peut également être configuré pour collecter des données de positionnement associées à un tel point d'intérêt physique. Le dispositif de marquage 2 peut également être configuré pour générer un marquage physique (ou pastille physique) associé au point d'intérêt physique sur le modèle physique 4 du produit. Le dispositif de marquage 2 peut également être configuré pour visualiser une zone de marquage sur le modèle physique 4.

Pour cela, le dispositif de marquage 2 peut comprendre un pointeur physique 21, une caméra 22, une mémoire de stockage 23, une interface homme-machine 24 et un ou plusieurs capteurs de positionnement 25.

Le pointeur physique 21 peut être configuré pour générer un marquage physique sur le modèle physique 4. Par exemple, le pointeur physique 21 peut correspondre à un poinçon ou un dispositif mécanique permettant d'apposer une gommette autocollante ou une pastille adhésive sur le modèle physique 4. Le marquage physique peut être sélectionné parmi plusieurs types (ou catégories) de marquage. Les différents types de marquage physique peuvent être distingués par des formes, couleurs et/ou annotations distinctes sur le marquage physique. Les marquages physiques peuvent par exemple être catégorisés en fonction d'un degré de priorité de traitement, d'un type de défaut soulevé, ou encore d'une partie du produit. Par exemple, en référence à la figure 1, le modèle physique 4 correspond à une maquette physique d'un véhicule automobile et les marquages physiques A, B, C sont de trois formes distinctes, correspondant respectivement à des vues distinctes du modèle physique 4 : la pastille A appartient à une vue frontale du véhicule (parallèle au plan (Y,Z) du référentiel physique (X,Y,Z)), la pastille B appartient à une vue latérale du véhicule (parallèle au plan (X,Z) du référentiel physique (X,Y,Z)) et la pastille C appartient à une vue horizontale du véhicule (i.e., parallèle au plan (X,Y) du référentiel physique (X,Y,Z)).

La caméra 22 peut être configurée pour capturer des prises de vues (sous forme d'images ou de flux vidéo) de façon continue, périodique ou sur commande manuelle de l'utilisateur. En particulier, la caméra 22 peut être configurée pour capturer des prises de vue de portions du modèle physique 4, incluant par exemple un point d'intérêt physique et/ou un marquage physique.

La mémoire de stockage 23 peut être configurée pour stocker des données collectées par le dispositif de marquage 2, comme des données de positionnement, des prises de vue, un nombre et/ou un nombre par type de pastilles physiques générées. La mémoire de stockage 23 peut également stocker des données et paramètres préconfigurés. Dans un mode de réalisation, la mémoire de stockage 23 peut également correspondre à une mémoire distante, stockée via un serveur distant du dispositif 2.

L'interface homme-machine 24 peut être configurées pour interagir avec l'utilisateur. Par exemple, l'interface homme-machine 24 peut être configurée pour recevoir, visualiser et/ou indiquer le type de marquage physique à générer, pour recevoir une commande de prise de vue ou afficher une prise de vue capturée, ou plus généralement pour recevoir des indications de l'utilisateur ou indiquer une action ou un état du dispositif 2 à l'utilisateur. Pour cela, l'interface homme-machine 24 peut comprendre un écran, un haut-parleur, un microphone, un voyant lumineux, une zone tactile et/ou une zone haptique.

Les capteurs de positionnement 25 peuvent être configurés pour collecter les données de positionnement associés à un point d'intérêt physique identifié par le dispositif de marquage 2. Autrement dit, un positionnement du dispositif 2 - incluant une localisation du dispositif et une orientation du dispositif - dans le référentiel physique (X,Y,Z) peut être estimé, en particulier lorsque le dispositif 2 est positionné au niveau du point d'intérêt physique identifié. Pour cela, les capteurs de positionnement 25 peuvent inclure des capteurs de localisation et d'orientation de type gyroscopes, accéléromètres, une unité de mesure inertielle (ou IMU). Les capteurs de positionnement 25 peuvent également inclure des capteurs et/ou émetteurs de signaux infrarouges configurés pour interagir avec des balises (ou antennes) de positionnement 3 de type balises infrarouges. Dans un mode de réalisation, les capteurs de positionnement 25 peuvent correspondre aux capteurs de position et d'orientation configurés pour fonctionner tel que décrit dans la demande française FR2112136.

L'unité de marquage 1 du système de marquage peut être configurée pour identifier un point d'intérêt virtuel appartenant au modèle numérique 5 associé au point d'intérêt physique identifié par le dispositif de marquage 2. L'unité de marquage 1 du système de marquage peut notamment être configurée pour identifier une position du point d'intérêt virtuel sur le modèle numérique 5. Une telle position étant identifiée à partir des données de positionnement collectées par le dispositif de marquage 2. L'unité de marquage 1 du système de marquage peut également être configurée pour générer un marquage numérique sur le modèle numérique 5 du produit à partir de la position identifiée.

Pour cela, l'unité de marquage 1 peut comprendre une unité de synchronisation du modèle hybride 10, une unité de communication 11, un processeur 12, une unité mémoire 13, une unité de marquage numérique 14 et une unité de mise à jour du modèle numérique 15.

L'unité de synchronisation du modèle hybride 10 est configurée pour synchroniser le modèle physique 4 et le modèle numérique dans l'espace et le temps. Pour cela, le référentiel physique (X,Y,Z) est synchronisé à un référentiel virtuel (x,y,z) associé au modèle numérique, comme représenté sur la figure 1. Pour cela, l'unité de synchronisation 10 peut être reliée à des bases de données et/ou serveurs permettant de relier des ensembles de données de positionnement exprimées dans le référentiel physique (X,Y,Z) à des positions exprimées dans le référentiel virtuel (x,y,z).

L'unité de communication 11 est configurée pour recevoir et émettre des données. Par exemple, l'unité de communication 11 peut être configurée pour recevoir les données de positionnement collectées par le dispositif de marquage 2. L'unité de communication 11 peut également être configurée pour transmettre des données relatives au marquage numérique et/ou à la position associée déterminées à partir des données de positionnement à une interface (e.g., un écran), une plateforme ou une entité logicielle. Par exemple, l'unité de communication 11 peut transmettre des données relatives à la génération du marquage numérique à l'entité logicielle de modélisation du modèle numérique 5. Une telle entité logicielle gérant la modélisation du modèle numérique 5 peut notamment être interne à l'unité de marquage 1, reliée par exemple à l'unité de mise à jour du modèle numérique 15.

Le processeur 12 peut être configuré pour exécuter des instructions d'un programme informatique enregistré sur un support d'enregistrement non transitoire, un tel programme permettant la mise en oeuvre d'un procédé de marquage numérique tel que décrit dans la suite de la description et à la figure 3.

L'unité mémoire 13 peut être configurée pour stocker des données collectées et/ou déterminées par l'unité de marquage 1, telles que les données de positionnement reçues du dispositif de marquage 2, des données relatives aux marquages numériques générés, des données relatives au modèle numérique 5. Dans un mode de réalisation, l'unité mémoire 13 peut correspondre à un serveur distant stockant une base de données reçues par l'unité de marquage 1. L'unité mémoire 13 peut également correspondre à une mémoire tampon (ou en anglais « buffer ») stockant temporairement les données reçues par l'unité de communication 11 (par exemple pour traitement par le processeur 12) avant de transmettre les données pour stockage sur un serveur distant (non représenté sur la figure 2).

L'unité de marquage numérique 14 peut être configurée pour générer un marquage numérique associé à une position identifiée à partir des données de positionnement. Autrement dit, l'unité de marquage numérique 14 peut être configurée pour générer une pastille virtuelle sur une surface du modèle numérique 5 du produit. Une telle pastille virtuelle peut par exemple être définie par un ensemble de coordonnées exprimées dans le référentiel virtuel (x,y,z). L'unité de marquage numérique 14 peut également être configurée pour générer des pastilles digitales (ou pastilles en deux dimensions, ou pastilles 2D) définies par un ensemble de coordonnées (ou pixels) exprimées dans un référentiel image (y,z). De telles pastilles digitales peuvent par exemple être générées sur des captures d'écran du modèle numérique 5, comme représenté sur la figure 7. En particulier, l'unité de marquage numérique 14 est configurée pour générer le marquage numérique en fonction de la position identifiée comme étant associée au point d'intérêt physique identifié sur le modèle physique 4 et donc aux données de positionnement collectées.

L'unité de mise à jour du modèle numérique 15 peut être configurée pour mettre à jour le modèle numérique 15, notamment avec le marquage numérique généré. L'unité de mise à jour du modèle numérique 15 peut également être configurée pour intégrer des prises de vue capturées par le dispositif de marquage 2 au modèle numérique 5, par exemple sous la forme d'une mise à jour d'une maquette 3D du produit. L'unité de mise à jour du modèle numérique 15 peut également être configurée pour ordonnancer, enrichir, relier, associer et/ou mettre à jour des données (par exemple sous la forme de métadonnées) associées au modèle numérique 5 et notamment aux différents marquages numériques tels que mis à jour sur le modèle numérique 5. Ainsi, le modèle numérique 15 mis à jour peut être exploité dans le cadre d'un projet collaboratif, dans lequel le modèle numérique 5 peut être manipulé, annoté, des données associées à chaque marquage numérique (e.g., sa position, sa catégorie, ses métadonnées) peuvent être partagées, exploitées, modifiées et/ou annotées.

Il est à présent fait référence à la figure 3. La figure 3 illustre une suite d'étapes mettant en oeuvre un procédé de marquage d'un modèle hybride modélisant un produit. Dans la suite de la description et dans les figures, le produit considéré est un véhicule automobile. Dans d'autres modes de réalisation, un tel produit peut correspondre à tout autre pièce, véhicule, élément, objet, dispositif, appareil dont la conception et le design sont modélisés par un modèle hybride.

À une étape 300 dite d'initialisation du modèle hybride, un modèle physique 4 du produit (e.g., une maquette physique ou un prototype) et un modèle numérique 5 du produit (e.g., une maquette 3D) sont synchronisés. Pour cela, l'unité de synchronisation du modèle hybride 10 peut procéder à une superposition des modèles 4, 5 à l'aide du dispositif de marquage 2 et/ou d'un dispositif de suivi (ou « tracker ») (non représenté sur les figures), un tel dispositif communiquant avec les balises de positionnement 3 telles que représentées sur les figures 1 et 2. En particulier, le dispositif de suivi peut être utilisé dans le cas d'un modèle physique mobile (notamment lorsque le modèle physique 4 peut être amovible, par exemple à l'aide d'une tournette). L'étape 300 inclut une phase d'initialisation et une phase de calibrage durant lesquelles trois points de repère virtuels sont identifiés sur le modèle numérique 5 dans le référentiel virtuel (x,y,z). Trois points de repère physiques associés aux positions respectives des trois points de repère virtuels sont alors identifiés et placés sur le modèle physique 4 dans le référentiel physique (X,Y,Z). La superposition du modèle physique 4 et du modèle numérique 5 est alors mise en oeuvre par triangulation à partir de l'association des trois points de repère physiques et des trois points de repère virtuels. En particulier, chaque point d'une zone de l'environnement réel (physique) incluant le modèle physique 4 est associé à un point virtuel respectif. Une telle zone de l'environnement réel peut notamment dépendre de positionnement des balises de positionnement 3 dans l'environnement réel. Pour cela, le dispositif de suivi est configuré pour interagir avec une ou plusieurs balises de positionnement 3 comme illustré sur la figure 1. En référence aux figures 1 et 2, trois balises de positionnement 3 sont représentées. Dans d'autres modes de réalisation, le nombre de balises de positionnement 3 peut varier, notamment en fonction de la taille du modèle physique 4. Par exemple, une seule balise de positionnement 3 peut être utilisée pour un modèle physique 4 d'un produit de la taille d'une cafetière, tandis que dix ou douze balises de positionnement 3 peuvent être utilisées pour un modèle physique 4 d'un produit plus volumineux tel qu'un engin, un bateau, une coque d'avion ou encore un wagon de train par exemple. À l'étape 300, les modèles physique 4 et numérique 5 sont alors ajustés, de sorte que les modèles 4, 5 sont identiques. Autrement dit, à chaque point, surface, courbe, ligne du modèle physique 4 est associée une ou plusieurs positions représentées sur le modèle numérique 5.

De plus, lors d'une telle étape 300, des plages de position et des plages de positionnement permettent de délimiter une surface du modèle hybride. Les plages de positionnement, définies dans le référentiel physique (X,Y,Z), permettent de délimiter (avec une marge d'erreur prédéfinie) une surface (physique) du modèle physique 4. De telles plages de positionnement peuvent dépendre au moins de dimensions associées au modèle physique 4 de l'objet. Par exemple, en référence à la figure 4, les points D, E, F appartiennent à la surface (ou l'enveloppe) du modèle physique 4, tandis que le point F' n'appartient pas à la surface du modèle physique 4. Similairement, les plages de position, définies dans le référentiel virtuel (x,y,z), permettent de délimiter une surface (virtuelle) du modèle numérique 5. Ainsi, en référence à la figure 5, les points d, e, f appartiennent à la surface du modèle numérique 5.

En particulier, la synchronisation des modèles 4, 5 à l'étape 300 peut inclure une association des points des espaces physiques et virtuels, de sorte que chaque point de la zone de l'environnement réel appartient aux plages de positionnement et est associé à un point compris dans les plages de positions dans le référentiel virtuel (x,y,z). Dans un mode de réalisation, chaque point de la zone de l'environnement réel, appartenant ou non à une surface du modèle physique 4, peut être associé à un point appartenant à la surface du modèle numérique 5. Pour cela, une projection surfacique de chaque point virtuel dans le référentiel virtuel (x,y,z) associé à un point physique de la zone de l'environnement réel peut être mise en oeuvre sur la surface du modèle numérique 5, de sorte qu'un tel point physique peut être associé à un point virtuel projeté appartenant à la surface du modèle numérique 5. Par exemple, en référence aux figures 4 et 5, les modèles physique 4 et numérique 5 sont synchronisés à l'étape 300 de sorte que les points physiques F et F' du modèle physique 4 de la figure 4 sont tous deux associés à un même point virtuel f appartenant à une surface du modèle numérique 5 de la figure 5. Ainsi, la zone de l'environnement réel peut permettre de délimiter une zone de collision des points des espaces physiques et virtuels, dans laquelle les points physiques et virtuels appartiennent respectivement aux plages de positionnement et de position prédéfinies.

À une étape 310, au moins un point d'intérêt physique est identifié sur le modèle physique 4 du produit. Par un point d'intérêt physique identifié sur le modèle physique 4, il peut être fait référence à un point d'intérêt physique identifié dans la zone de l'environnement réel incluant le modèle physique 4. Pour cela, le dispositif de marquage 2 peut être pris en main par un utilisateur, comme illustré sur les figures 4 et 6, et positionné (i.e., à la fois localisé et orienté) de sorte à pointer le pointeur physique 21 du dispositif 2 vers le point d'intérêt physique. Un tel pointage peut mettre en contact direct le dispositif 2 et le modèle physique 4 ou être un pointage à distance. En particulier, le dispositif 2 peut être orienté vers la surface du modèle physique 4. En particulier, le dispositif 2 peut être positionné de sorte que le point d'intérêt physique appartient à la surface du modèle physique 4. Par exemple, en référence à la figure 4, les points D, E, F, F' peuvent être des points d'intérêt physiques identifiés via le dispositif de marquage 2, les points D, E, F appartenant à la surface du modèle physique 4 et le point F' appartenant à un plan P disjoint de (i.e., non sécant à) la surface du modèle physique 4.

À une étape optionnelle 320, un marquage (ou pastillage) physique peut être réalisé sur la surface du modèle physique 4. Dans ce cas, les données de positionnement sont notamment collectées au niveau du marquage physique. Par exemple, en référence à la figure 4, un marquage physique sur la surface du modèle physique 4 est réalisé au niveau des points d'intérêt physiques D, E, F. Les données de positionnement collectées peuvent alors correspondre respectivement aux coordonnées des points D, E, F dans le référentiel physique (X,Y,Z). Le marquage physique peut être généré par commande de l'utilisateur, par exemple, en approchant le pointeur physique 21 de la surface du modèle physique 4. Un type de marquage physique peut également être sélectionné à l'étape 340 (par exemple en sélectionnant une catégorie de marquage physique à générer via l'interface homme-machine 24). Dans un mode de réalisation, le marquage physique peut correspondre au (ou être confondu avec le) point d'intérêt physique identifié, de sorte qu'à l'étape 320, aucune nouvelle pastille physique supplémentaire n'est apposée sur le modèle physique 4. Le marquage physique (et/ou le point d'intérêt physique) peut être visualisé via l'interface homme-machine 24 du dispositif 2 lorsque celui-ci est pointé vers le point d'intérêt physique.

À une étape optionnelle 330, une ou plusieurs prises de vue peuvent être capturées par la caméra 22 du dispositif de marquage 2. De telles prises de vue peuvent notamment être associées au (et inclure le) point d'intérêt physique identifié. De telles prises de vue peuvent être déclenchées périodiquement, automatiquement (par exemple, dès que le dispositif 2 est allumé et sensiblement immobile au-delà d'un délai préconfiguré), ou sur commande manuelle de l'utilisateur (par exemple, en actionnant une fonctionnalité de prise de vue du dispositif 2 via l'interface homme-machine 24).

À une étape 340, des données de positionnement du point d'intérêt physique sont collectées. De telles données de positionnement incluent notamment des données d'orientation et des données de localisation du dispositif 2 lorsque celui est positionné (ou pointe) au niveau du point d'intérêt physique identifié. Pour collecter au moins une partie de ces données de positionnement (par exemple, les données de localisation), les capteurs de positionnement 25 du dispositif de marquage 2 peuvent échanger des signaux radiofréquence avec les balises de positionnement 3 disposés dans l'environnement réel. De telles balises de positionnement 3 ont en particulier un positionnement connu dans le référentiel physique (X,Y,Z). De tels signaux radiofréquence peuvent notamment être des ondes radios de type infrarouges. Des données de positionnement peuvent être déterminés par triangulation, en mesurant des temps d'arrivée (en anglais « Time of Arrival » ou TOA), de différences de temps d'arrivée (en anglais « Time Difference of Arrival » ou TdOA) et/ou de propagation des signaux infrarouges entre le dispositif 2 et chacune des balises 3. En particulier, une telle étape est mise en oeuvre de façon sensiblement instantanée, de sorte que les données de positionnement collectées à l'étape 340 correspondent sensiblement au positionnement en temps réel du dispositif 2 et varient de façon sensiblement instantanée lorsque le dispositif 2 est déplacé. Pour collecter au moins une partie de ces données de positionnement (par exemple, les données d'orientation), les capteurs de positionnement 25 du dispositif peuvent mesurer une variation de mouvement et/ou un positionnement intrinsèque du dispositif 2 à l'aide de gyroscopes, gyromètres, accéléromètres, unité de mesure inertielle. À l'issue de l'étape 340, un ensemble de données de positionnement est collecté en association avec le point d'intérêt physique identifié, un tel ensemble de données de positionnement pouvant correspondre à des coordonnées dans le référentiel physique (X,Y,Z).

À une étape 350, dans un mode de réalisation, les données de positionnement sont traitées de sorte à identifier un point de la surface du modèle physique 4 associée au point d'intérêt physique identifié, et par association du modèle physique 4 et du modèle numérique 5, un point de la surface du modèle numérique 5 associé au point d'intérêt physique identifié. Pour cela, l'étape 350 peut inclure une comparaison des données de positionnement collectées à l'étape 320 aux plages de positionnement prédéfinies lors de l'étape 300 selon le référentiel physique (X,Y,Z). De telles plages de positionnement prédéfinies peuvent être associées à une surface ou à un espace d'occupation dans l'environnement réel du modèle physique 4. Les amplitudes des plages de positionnement prédéfinies peuvent déprendre des dimensions associées au modèle physique 4, en prenant éventuellement en compte une marge d'erreur non nulle, de sorte que les plages de positionnement peuvent définir une zone d'occupation du modèle physique 4 sensiblement plus large que la surface même du modèle physique 4. Par exemple, en référence à la figure 4, le point physique F' peut appartenir à la zone d'occupation du modèle physique 4 sans être précisément sur une surface du modèle physique 4.

Si, à l'étape 350, les données de positionnement sont inclues dans les plages de positionnement prédéfinies, cela signifie que le point d'intérêt physique identifié à l'étape 310 appartient à la zone de l'environnement réel délimitant le modèle physique 4. Dans un mode de réalisation, les données de positionnement peuvent appartenir aux plages de positionnement de sorte que le point d'intérêt physique peut être directement associé à une surface du modèle physique 4. Autrement dit, le point d'intérêt physique tel qu'identifié par le dispositif 2 est identifié comme appartenant à la surface du modèle physique 4. En référence à la figure 4 et à titre d'exemple, les données de positionnement respectives des points d'intérêt physiques D, E, F sont comprises dans les plages de positionnement prédéfinies et appartiennent à la surface du modèle physique 4. Dans un autre mode de réalisation, les données de positionnement peuvent appartenir aux plages de positionnement de sorte que le point d'intérêt physique appartient à un voisinage de la surface du modèle physique 4, sans être directement positionné sur la surface du modèle physique 4. Par exemple, un tel mode de réalisation peut correspondre au cas où les plages de positionnement définissent une surface du modèle physique 4 avec une marge d'erreur non nulle, et que les données de positionnement du point d'intérêt physique sont proches des valeurs extrêmes des plages de positionnement (par exemple, avec un écart inférieur à un seuil prédéfini). En référence à la figure 4 et à titre d'exemple, les données de positionnement du point d'intérêt physique F' peuvent correspondre à des valeurs extrêmes des plages de positionnement prédéfinies : le point d'intérêt physique F' n'appartient pas à la surface du modèle physique 4.

Dans le cas où les données de positionnement appartiennent aux plages de positionnement de sorte que le point d'intérêt physique peut être directement associé à une surface du modèle physique 4 (par exemple, les points D, E et F de la figure 4), un point d'intérêt virtuel appartenant à la surface virtuelle du modèle numérique 5 associé aux données de positionnement peut directement être identifié lors d'une étape 360 décrite ci-dessous. Dans un autre cas où les données de positionnement appartiennent aux plages de positionnement de sorte que le point d'intérêt physique appartient à un voisinage de la surface du modèle physique 4, sans être directement associé à la surface du modèle physique 4 (par exemple, le point F de la figure 4), une étape optionnelle 351 peut être mise en oeuvre.

À une telle étape 351, les données de positionnement peuvent alors être associées à des données d'ajustement, de sorte que le point d'intérêt physique soit associé à un point d'intérêt virtuel projeté appartenant à la surface du modèle numérique 5. Un tel point d'intérêt virtuel projeté peut être considéré par projection surfacique du point d'intérêt virtuel initialement associé au point d'intérêt physique (e.g., dont la position dans le référentiel (x,y,z) correspond aux données de positionnement dans le référentiel (X,Y,Z)) sur une surface du modèle numérique 5. En référence à la figure 4 et à titre d'exemple, le point d'intérêt physique F' appartient à un voisinage de la surface du modèle physique 4, sans être directement associé à la surface du modèle physique 4 : les données de positionnement du point F' peuvent alors être associées à des données d'ajustement de sorte que, dans l'espace virtuel, le point virtuel associé au point physique F' correspond à un point d'intérêt virtuel projeté f. L'utilisation de telles données d'ajustement sera détaillée à l'étape 360.

Les données d'ajustement peuvent également prendre en compte les données d'orientation du dispositif 2, de sorte que la projection surfacique d'un point d'intérêt virtuel associé au point d'intérêt physique identifié sur la surface du modèle numérique 5 n'est pas systématiquement mise en oeuvre par rapport à la surface la plus proche (c'est-à-dire ayant la distance euclidienne la plus courte) du point d'intérêt virtuel initialement associé au point d'intérêt physique. Une telle prise en compte des données d'orientation pour la projection surfacique d'un point d'intérêt virtuel sur la surface du modèle numérique 5 dans l'espace virtuel sera détaillée à l'étape 360.

Si, à l'étape 350, les données d'ajustement sont hors des plages de positionnement, il peut être considéré que les positionnement du dispositif 2 est hors de la zone de l'environnement réel correspondant à la zone de collision du modèle hybride. Autrement dit, il est détecté que le dispositif est positionné trop loin par rapport au modèle physique 4 pour identifier un point d'intérêt virtuel associé au point d'intérêt physique correspondant à de telles données de positionnement. Dans ce cas, la suite du procédé peut être suspendue (en particulier, les étapes 360, 370, 380 peuvent ne pas être mises en oeuvre) et une nouvelle acquisition des données de positionnement à l'étape 340 peut être requise. Pour cela, une alerte, un message et/ou un voyant de couleur peut être activé via l'interface homme-machine 24 du dispositif 2 à une étape 352.

À une étape 360, une position d'un point d'intérêt virtuel associé au point d'intérêt physique est identifiée sur le modèle numérique 5. En particulier, la position d'un tel point d'intérêt virtuel dépend des données de positionnement du point d'intérêt physique. Une telle position peut être identifiée à partir des données de positionnement collectées à l'étape 320, de la synchronisation du modèle hybride à l'étape 300 ainsi que des données d'ajustement éventuelles associées aux données de positionnement telles que déterminées à l'étape 350. Par la synchronisation initiale du modèle hybride à l'étape 300, les données de positionnement dans le référentiel physique (X,Y,Z) peuvent être associées à une position dans le référentiel virtuel (x,y,z). Ainsi, en référence aux figures 4 et 5, les points d'intérêt virtuels d, e, f sur le modèle numérique 5 peuvent être associés aux points d'intérêt physiques D, E, F sur le modèle physique 4.

En particulier, lors de l'étape 360, les données d'ajustement associées aux données de positionnement peuvent être considérées afin d'identifier un point d'intérêt virtuel appartenant à la surface du modèle numérique 5, de sorte qu'un point d'intérêt physique appartenant à la zone de l'environnement réel du modèle physique 4 sans appartenir à une surface du modèle physique 4 peut être associé à une surface (virtuelle) du modèle numérique 5. Ainsi, via les données d'ajustement, une projection surfacique du point d'intérêt virtuel (initialement) associé aux données de positionnement peut être mise en oeuvre sur une surface (virtuelle) du modèle numérique 5, de sorte que le point d'intérêt virtuel associé à de telles données de positionnement appartienne à la surface du modèle numérique 5. Par exemple, en référence aux figures 4 et 5, une projection surfacique du point d'intérêt virtuel (non représenté sur la figure 5) associé aux données de positionnement du point F' permet d'obtenir le point d'intérêt virtuel f en tant que point d'intérêt virtuel associé au point d'intérêt physique F' de la figure 4. Un tel point d'intérêt virtuel f est alors un point d'intérêt virtuel projeté du point d'intérêt physique F' et un point d'intérêt virtuel (initial) du point d'intérêt physique F.

En particulier, une telle projection surfacique prend en compte les données d'orientation du dispositif 2. En référence aux figures 6 et 7, le dispositif 2 est localisé au niveau d'une portière du véhicule. Cependant, le dispositif 2 est orienté de sorte que le pointeur physique 21 du dispositif 2 est orienté en direction du rétroviseur de la portière, comme indiqué par la flèche pointillée sur la figure 6. Ainsi, la projection surfacique du point d'intérêt virtuel associé aux données de positionnement du dispositif 2 dans un tel contexte permet d'obtenir un point d'intérêt virtuel projeté g appartenant au rétroviseur du modèle numérique 5, et non un point d'intérêt virtuel h qui résulterait d'une projection surfacique sur la surface la plus proche du modèle numérique 5, comme indiqué par la flèche pleine sur la figure 6. À l'issue de l'étape 360, une position dans le référentiel virtuel (x,y,z) associée au point d'intérêt physique identifié peut alors être identifiée. En particulier, une telle projection surfacique permet une correction automatique de la correspondance entre les points physiques et virtuels dans le modèle hybride et permet notamment de corriger des légers décalages de synchronisation entre le modèle physique 4 et le modèle numérique 5.

À une étape 370, un marquage (ou pastille) numérique associé à la position identifiée à l'étape 360 peut être générée sur le modèle numérique 5, par l'unité de marquage numérique 14 du système de marquage. Un tel marquage numérique peut correspondre à un ensemble de coordonnées dans le référentiel virtuel (x,y,z) correspondant à une portion de la surface du modèle numérique 5. En particulier, un tel marquage numérique est dit « surfacique », en ce qu'il dépend de la forme de la surface virtuelle du modèle numérique 5. En référence à la figure 5, les marquages numériques d, e, f sont générés sur le modèle numérique 5, de tels marquages numériques dépendant des surfaces sensiblement horizontale, frontale et latérale respectives auxquelles elles appartiennent. En particulier, si le marquage physique généré à l'étape 320 appartient à une catégorie de marquage donnée, le marquage numérique associé généré à l'étape 370 peut conserver une telle catégorie (comme représenté par les formes des marquages physiques A, B, C et numériques a, b, c sur la figure 1).

À une étape 380, un modèle numérique 5 à jour du produit est obtenu. Un tel modèle numérique 5 à jour peut notamment intégrer le marquage numérique généré à l'étape 370 à partir des étapes 310 à 350 mises en oeuvre sur le modèle physique 4. Le modèle numérique 5 obtenu correspond alors à une modélisation numérique directement synchronisée avec le modèle physique 4, comme représenté sur les figures 1 et 5. Le modèle numérique 5 à jour peut alors être exploité, partagé, annoté, complété, commenté via une ou plusieurs unités logicielles. En particulier, les marquages numériques générés à l'étape 370 peuvent être enrichies par des métadonnées. De telles métadonnées peuvent par exemple inclure les prises de vue du modèle physique 4 capturées à l'étape 330. Par exemple, la figure 7 illustre une prise de vue d'une portion du modèle physique 4 tel que capturé par le dispositif 2 tel que positionné sur la figure 6. Une telle prise de vue peut alors devenir une métadonnée associée au marquage numérique g tel que généré. De plus, de telles prises de vue peuvent inclure une ou plusieurs pastilles digitales en deux dimensions, obtenues à partir des marquages numériques générées sur le modèle numérique 5 lors de l'étape 370.

Dans un mode de réalisation, des pastilles d'origine numérique peuvent être créées directement sur le modèle numérique 5 ainsi mis à jour, par exemple par une fonctionnalité logicielle. Une position associée à une telle pastille d'origine numérique peut alors être obtenue dans le référentiel virtuel (x,y,z). La synchronisation des modèles physique 4 et numérique 5 telle que mise en oeuvre lors de l'étape 300 permet notamment d'obtenir des données de positionnement dans le référentiel physique (X,Y,Z) associées à une telle position. Il est alors possible d'utiliser le modèle numérique 5 mis à jour à l'étape 380 afin d'identifier des points d'intérêt physiques dans l'environnement du modèle physique 4 à partir de pastilles d'origine numérique (et donc de points d'intérêts virtuels).

Le modèle numérique 5 ainsi mis à jour, comprenant des marquages numériques - et potentiellement des métadonnées associées - peut alors être exploité dans le cadre d'expériences collaboratives impliquant des acteurs n'ayant pas accès au modèle physique 4. Le modèle numérique 5 à jour permet en effet d'avoir une modélisation numérique synchronisée avec le modèle physique 4 manipulé dans l'environnement réel, une telle modélisation numérique pouvant être accessible pour une pluralité d'entités informatiques (e.g., appareils mobiles, ordinateurs, plateforme cloud...) distantes du modèle physique 4.

### Liste des signes de référence

1 : unité de traitement
10 : unité de synchronisation du modèle hybride
11 : unité de communication
12 : processeur
13 : unité mémoire
14 : unité de marquage numérique
15 : unité de mise à jour du modèle numérique
2 : dispositif de marquage
21 : pointeur physique
22 : caméra
23 : mémoire de stockage
24 : interface homme-machine
25 : capteur(s) de positionnement
3 : balise de positionnement
(X,Y,Z) : référentiel physique
A, B, C, D, E, F, F' : points d'intérêt physiques
(x,y,z) : référentiel virtuel
a, b, c, d, e, f, g, h : points d'intérêt virtuels / marquages numériques

## Revendications

1. Procédé de marquage d'un modèle hybride d'un objet mis en oeuvre par un système de marquage (1,2), ledit modèle hybride comprenant au moins un modèle physique (4) de l'objet dans un environnement physique et un modèle numérique (5) de l'objet, le procédé comprenant les étapes suivantes :
- collecter (340) des données de positionnement d'un point d'intérêt physique du modèle physique (4) dans un premier référentiel prédéfini (X,Y,Z) de coordonnées en trois dimensions,
- comparer (350) les données de positionnement avec des plages de positionnement prédéfinies, lesdites plages de positionnement dépendant au moins de dimensions associées au modèle physique (4) de l'objet,
- en fonction des données de positionnement collectées, identifier (360), en temps réel, une position d'un point d'intérêt virtuel sur le modèle numérique (5) dans un second référentiel prédéfini (x,y,z), ledit point d'intérêt virtuel étant associé au point d'intérêt physique et ladite position étant obtenue à partir des données de positionnement collectées,
- en fonction de ladite comparaison (350), ajuster (351) la position du point d'intérêt virtuel par une projection surfacique dudit point d'intérêt virtuel sur une surface du modèle numérique (5),
- générer (370) un marquage numérique associé à ladite position projetée sur le modèle numérique (5) de l'objet, de sorte que le marquage numérique appartienne à une surface du modèle numérique (5) en ladite position projetée.

2. Procédé selon la revendication 1, dans lequel le modèle physique (4) et le modèle numérique (5) sont synchronisés par triangulation dans l'environnement du modèle physique (4), de sorte qu'un point physique du modèle physique (4) est associé à un point virtuel du modèle numérique (5).

3. Procédé selon l'une des revendications précédentes, dans lequel les données de positionnement sont collectées à partir d'un marquage physique réalisé sur le modèle physique (4).

4. Procédé selon l'une des revendications précédentes, dans lequel les données de positionnement sont collectées par rayonnement infrarouge par interaction du système de marquage (1,2) avec des balises infrarouges (3) disposées dans l'environnement physique.

5. Procédé selon l'une des revendications précédentes comprenant en outre, après l'étape (340) de collecte des données de positionnement :
- comparer (350) les données de positionnement avec des plages de positionnement prédéfinies, lesdites plages de positionnement dépendant au moins de dimensions associées au modèle physique (4) de l'objet et, si les données de positionnement du point d'intérêt physique se trouvent hors des plages de positionnement :
- émettre (352) un signal requérant une collecte de secondes données de positionnement d'un second point d'intérêt physique du modèle physique (4) dans le premier référentiel prédéfini (X,Y,Z).

6. Procédé selon l'une des revendications précédentes, dans lequel le marquage numérique s'étend sur un ensemble de points d'au moins une surface du modèle numérique (5), ledit ensemble de points résultant d'une projection surfacique du point d'intérêt virtuel sur ladite surface.

7. Procédé selon l'une des revendications précédentes, les données de positionnement incluant au moins des données relatives à une orientation du système de marquage (1,2) dans l'environnement physique, et dans lequel ladite projection surfacique dépend de ladite orientation du système de marquage (1,2) par rapport à au moins une surface physique du modèle physique (4).

8. Procédé selon l'une des revendications précédentes, comprenant en outre, après l'étape (340) de collecte des données de positionnement :
- enregistrer (330) une prise de vue d'une portion du modèle physique (4) de l'objet comprenant le point d'intérêt physique, ladite prise de vue étant associée aux données de positionnement,
et dans lequel ladite prise de vue devient une métadonnée du marquage numérique.

9. Système de marquage (1,2) numérique d'un objet comprenant au moins :
- un dispositif de marquage (2) configuré au moins pour pointer un point d'intérêt physique du modèle physique de l'objet, ledit pointage incluant le relevé d'un positionnement du point d'intérêt physique par rapport au modèle physique (4) de l'objet,
- une unité de marquage (1) configurée au moins pour recevoir des données de positionnement dudit positionnement relevé, et
- au moins une unité de traitement configurée pour mettre en oeuvre le procédé selon l'une des revendications 1 à 9.

10. Système (1,2) selon la revendication 9 comprenant en outre :
- une interface de communication infrarouge (25) configurée pour émettre des signaux infrarouges à destination de balises infrarouges (3) disposées dans un environnement physique du modèle physique (4) de l'objet,
et dans lequel le positionnement du point d'intérêt physique est relevé à partir desdits signaux infrarouges.

11. Programme informatique comportant des instructions pour la mise en oeuvre du procédé selon l'une des revendications 1 à 8 lorsque ce programme est exécuté par un processeur.

12. Support d'enregistrement non transitoire lisible par un ordinateur sur lequel est enregistré un programme pour la mise en oeuvre du procédé selon l'une des revendications 1 à 8 lorsque ce programme est exécuté par un processeur.
